# EUROPÄISCHE PATENTSCHRIFT

(11) **EP 4 436 838 B1**
(45) Veröffentlichungstag und Bekanntmachung des Hinweises auf die Patenterteilung: **03.09.2025**
(21) Anmeldenummer: 22808738.3
(22) Anmeldetag: 21.10.2022
(51) Int. Cl.: B60R 19/18, B29C 43/02, B29C 43/14, B29C 43/22, B29C 43/30, B62D 25/08, B62D 29/04

(54) **CRASHMANAGEMENTSYSTEM FÜR EIN KRAFTFAHRZEUG MIT STOSSFÄNGERELEMENT IN SANDWICHBAUWEISE, HERSTELLUNGSVERFAHREN HIERFÜR UND KRAFTFAHRZEUG**
CRASH MANAGEMENT SYSTEM FOR A MOTOR VEHICLE HAVING BUMPER ELEMENT WITH A SANDWICH STRUCTURE, PRODUCTION METHODS THEREFOR AND MOTOR VEHICLE
SYSTÈME DE GESTION DE COLLISION POUR UN VÉHICULE À MOTEUR AYANT UN ÉLÉMENT DE PARE-CHOCS AVEC UNE STRUCTURE EN SANDWICH, PROCÉDÉS DE PRODUCTION ASSOCIÉS ET VÉHICULE À MOTEUR

(30) Priorität: 22.11.2021 DE 102021130445
(43) Veröffentlichungstag der Anmeldung: 02.10.2024
(73) Patentinhaber: AUDI AG, 85057 Ingolstadt (DE)
(72) Erfinder: RAUSCH, Julius, 74074 Heilbronn (DE)
(86) Internationale Anmeldenummer: PCT/EP2022/079431
(87) Internationale Veröffentlichungsnummer: WO 2023/088637

(56) Entgegenhaltungen:
- DE-A1- 102012 111 488
- US-A1- 2017 253 202

## Beschreibung

Die Erfindung betrifft ein Crashmanagementsystem aus Kunststoffmaterial für ein Kraftfahrzeug, ein Herstellungsverfahren für ein solches Crashmanagementsystem und ein Kraftfahrzeug mit einem solchen Crashmanagementsystem.

Verschiedene Strukturbauteile aus Kunststoffmaterial oder aus einem Mix von Metall- und Kunststoffmaterialien für Kraftfahrzeuge sind beispielsweise aus der US 2017/253202 A1, DE 10 2012 111 488 A1, der DE 10 2010 014 503 A1 oder der WO 93/15933 A1 bekannt.

Die der Erfindung zu Grunde liegende Aufgabe wird darin gesehen, ein Crashmanagementsystem anzugeben, das im Wesentlichen vollständig aus Kunststoffmaterial hergestellt ist.

Diese Aufgabe wird gelöst durch ein Crashmanagementsystem, ein Herstellungsverfahren und ein Kraftfahrzeug mit den Merkmalen der jeweiligen unabhängigen Patentansprüche. Vorteilhafte Ausgestaltungen mit zweckmäßigen Weiterbildungen sind in den abhängigen Patentansprüchen angegeben.

Vorgeschlagen wird also ein Crashmanagementsystem für ein Kraftfahrzeug mit wenigstens zwei Decklagen aus einem ersten endlosfaserverstärkten Kunststoffmaterial; einem zwischen den beiden Decklagen angeordneten Kernelement aus einem zweiten Kunststoffmaterial, wobei das Kernelement und die Decklagen stoffschlüssig miteinander verbunden sind; und mit mehrere Rippenabschnitten aus dem zweiten Kunststoffmaterial, die auf einer der Decklagen angeordnet und mit dieser stoffschlüssig verbunden sind; wobei die Rippenabschnitte und das Kernelement mittels Spritzgießen oder Fließpressen einstückig miteinander verbunden sind.

Mit anderen Worten wird ein vollständig aus Kunststoffmaterialien hergestelltes Crashmanagementsystem vorgeschlagen, bei dem die beiden Decklagen mit Endlosfasern ausgeführt sind und dazwischen ein Kunststoffkern angeordnet ist, wobei der Kunststoffkern und die Rippenabschnitte aus dem gleichen Kunststoffmaterial hergestellt sind. Dies vereinfacht die Herstellung eines solchen Crashmanagementsystems. Ferner können das erste endlosfaserverstärkte Kunststoffmaterial der Decklagen und das zweite Kunststoffmaterial für das Kernelement und die Rippenabschnitte optimal aufeinander abgestimmt werden, wobei das zweite Kunststoffmaterial insbesondere auch hinsichtlich seiner Eigenschaften bei der Verarbeitung durch Spritzgusstechnik oder Fließpresstechnik ausgewählt werden kann.

Bei dem Crashmanagementsystem kann das Kernelement mit wenigstens einem Randabschnitt einstückig verbunden sein, der sich entlang von Rändern der beiden Decklagen erstreckt. Mit anderen Worten geht das zwischen den Decklagen aufgenommene Kernelement in den Randabschnitt über, so dass eine durchgehende Struktur aus dem zweiten Kunststoffmaterial gebildet ist.

Dabei kann der Randabschnitt ausgehend von dem Kernelement einen gekrümmten Übergangsabschnitt und einen zum Kernelement im Wesentlichen orthogonal ausgerichteten Verbindungabschnitt aufweisen. Das Kernelement bildet somit eine flächige Zwischenlage, die zwischen den Decklagen aufgenommen ist, wobei sich außerhalb der Decklagen der Übergangsabschnitt und der Verbindungsabschnitt anschließen. Dabei sind die Decklagen und das Kernelement im Wesentlichen parallel zueinander ausgerichtet, wobei der Verbindungsabschnitt im Wesentlichen orthogonal hierzu ausgebildet ist.

Bei dem Crashmanagementsystem kann das Kernelement zwei Randabschnitte aufweisen, zwischen denen die Rippenabschnitte angeordnet sind.

Dabei können die beiden Randabschnitte im Wesentlichen parallel zueinander angeordnet sein und die Rippenabschnitte geneigt zu den Randabschnitten ausgerichtet sein. Insbesondere können die Rippenabschnitte gekreuzt zueinander angeordnet bzw. ausgebildet sein, derart dass durch die Rippenabschnitte oder/und die Randabschnitte Hohlräume umgeben werden, die einseitig durch eine der Decklagen begrenzt sind.

Bei dem Crashmanagementsystem können die Decklagen, das Kernelement und die Rippenabschnitte ein im Wesentlichen in Fahrzeugbreitenrichtung erstreckendes Stoßfängerelement in Sandwichbauweise bilden. Dabei bilden die beiden Decklagen und das Kernelement die Sandwichstruktur und die Rippenabschnitte bilden eine Art Auflage auf einer der Decklagen. Mit anderen Worten ist eine der Decklagen zwischen den Rippenabschnitten und dem Kernelement angeordnet bzw. aufgenommen.

Das Crashmanagementsystem kann wenigstens zwei Crashboxelemente aus einem dritten Kunststoffmaterial aufweisen, die dazu eingerichtet sind, eine Verbindung zwischen dem Crashmanagementsystem und einer Fahrzeugkarosserie, insbesondere Längsträgern oder/und Querträgern, herzustellen.

Dabei können die Crashboxelemente mit dem Stoßfängerelement verbunden sein, insbesondere verschraubt oder verschweißt oder verklebt sein.

Ferner können die die Crashboxelemente als Spritzgussteil ausgeführt sein.

Es ist auch denkbar, dass die Crashboxelemente einstückig mit dem Kernelement ausgebildet sind und ein einem gleichzeitigen Prozess hergestellt werden, also zusammen mit dem Kernelement und den Rippenabschnitten.

Vorgeschlagen wird auch ein Verfahren zur Herstellung eines oben beschriebenen Crashmanagementsystems, umfassend die Schritte:
Bereitstellen in einem Presswerkzeug einer ersten vorgewärmten Decklage aus einem ersten endlosfaserverstärkten Kunststoffmaterial;
Bereitstellen einer Fließpressmasse aus einem zweiten Kunststoffmaterial auf der ersten Decklage;
Bereitstellen einer zweiten vorgewärmten Decklage aus dem ersten Kunststoffmaterial auf der Fließpressmasse;
Pressen der beiden Decklagen und der Fließpressmasse, derart dass zwischen den Decklagen ein Kernelement ausgeformt wird und auf einer der Decklagen Rippenabschnitte ausgebildet werden, so dass ein Stoßfängerelement in Sandwichbauweise erzeugt wird.

Alternativ wird ein Verfahren zur Herstellung eines oben beschriebenen Crashmanagementsystems vorgeschlagen, umfassend die Schritte:
Bereitstellen in einem Spritzgusswerkzeug einer ersten und einer zweiten vorgewärmten Decklage aus einem ersten endlosfaserverstärkten Kunststoffmaterial;
Schließen des Spritzgusswerkzeugs;
Einspritzen einer Spritzgussmasse aus einem zweiten Kunststoffmate-rial, derart dass zwischen den Decklagen ein Kernelement aus der Spritzgussmasse ausgeformt wird und auf einer der Decklagen Rippenabschnitte aus der Spritzgussmasse ausgebildet werden, so dass ein Stoßfängerelement in Sandwichbauweise erzeugt wird.

Bei dem alternativen Verfahren kann nach dem Einspritzen der Spritzgussmasse ein Expansionshub des Spritzgusswerkzeugs durchgeführt werden, wobei Werkzeughälften des Spritzgusswerkzeug wenige Millimeter voneinander wegbewegt werden, derart dass zumindest eine Expansion des Kernelements ermöglicht wird.

Beide oben beschriebenen Verfahren können ferner folgende Schritte umfassen:
Herstellen von wenigstens einem Crashboxelement in einem Spritzgusswerkzeug;
Bereitstellen von dem Crashboxelement;
Verbinden von wenigstens einem Crashboxelement mit dem Stoßfängerelement.

Ein Kraftfahrzeug kann wenigstens ein oben beschriebenes Crashmanagementsystem aufweisen, wobei das Crashmanagementsystem mit einer Karosserie, insbesondere Längsträgern oder/und Querträgern, des Kraftfahrzeugs verbunden ist. Das Crashmanagementsystem kann insbesondere an einer Front oder einem Heck des Kraftfahrzeugs vorgesehen sein.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: zeigt in einer schematischen und vereinfachten Perspektivdarstellung ein Beispiel eines Crashmanagementsystems;
- Fig. 2: zeigt eine vereinfachte und schematische Schnittdarstellung etwa entsprechend der Schnittlinie **II-II** der Fig. 1;
- Fig. 3: zeigt in den Teilfiguren A) und B) vereinfachte und schematische Schnittdarstellungen etwa entsprechend der Schnittlinien **IIIA-IIIA** und **IIIB-IIIB** der Fig. 1;
- Fig. 4: zeigt eine vereinfachte und schematische Draufsicht auf ein Kraftfahrzeug mit einem Crashmanagementsystem;
- Fig. 5: zeigt ein vereinfachtes Ablaufdiagramm von Herstellungsverfahren für das Crashmanagementsystem.

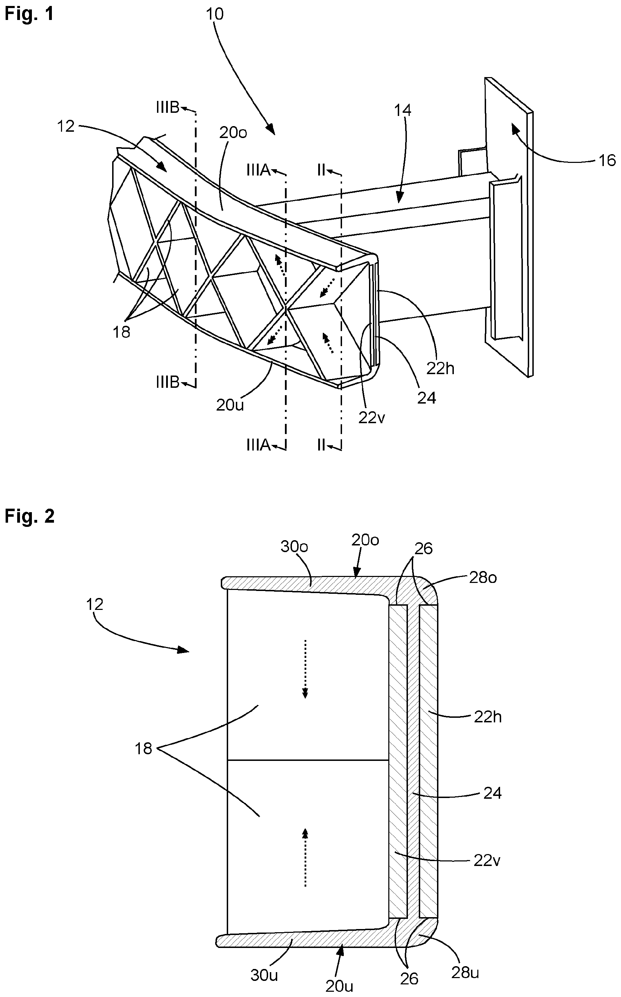

In Fig. 1 ist vereinfacht und schematisch ein Crashmanagementsystem 10 in einer perspektivischen Darstellung gezeigt. Beispielhaft ist bezogen auf eine übliche Fahrzeuglängsrichtung X und eine Fahrzeugbreitenrichtung Y ein vorderer linker Bereich des Crashmanagementsystems 10 gezeigt.

Das Crashmanagementsystem 10 umfasst ein Stoßfängerelement 12, das sich im Wesentlichen in Fahrzeugbreitenrichtung Y erstreckt.

Das Stoßfängerelement 12 ist mittels eines Crashboxelements 14 mit einer hier nur vereinfacht dargestellten Fahrzeugkarosserie 16 verbunden, insbesondere mit einem Längsträger oder/und einem Querträger der Fahrzeugkarosserie 16.

Das Crashmanagementsystem 10 bzw. das Stoßfängerelement 12 weist Rippenabschnitte 18 auf, die zwischen oberen und unteren Randabschnitten 20o, 20u verlaufen. Dabei verlaufen die Randabschnitte 20 im Wesentlichen parallel zueinander und die Rippenabschnitte 18 sind hierzu geneigt ausgeführt. Insbesondere kreuzen sich die Rippenabschnitte 18 im gezeigten Beispiel.

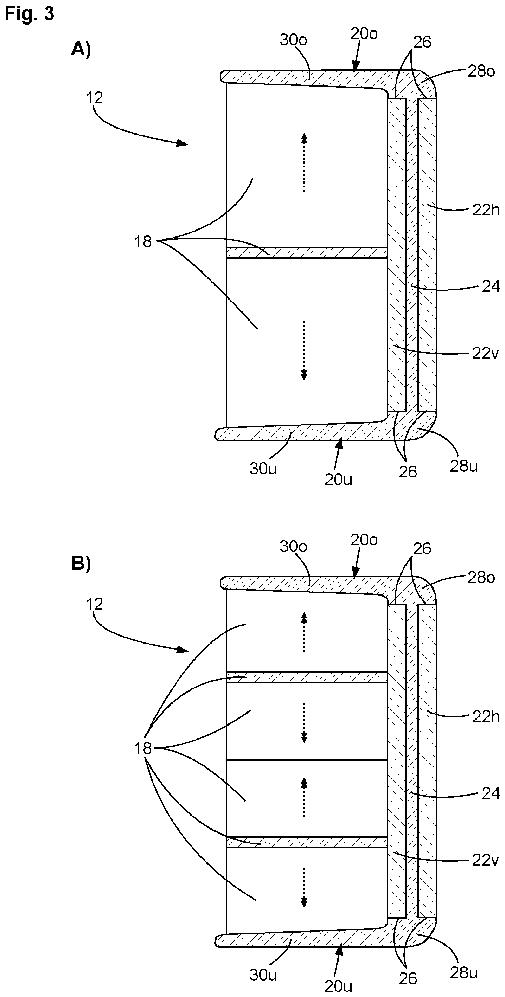

Nachfolgend wird unter Bezugnahme auf die Schnittdarstellungen der Fig. 2 und 3 der Aufbau des Crashmanagementsystems 10, insbesondere des Stoßfängerelements 12 genauer beschrieben. Dabei entsprechen die Schnittdarstellungen der Fig. 2, 3A und 3B etwa den Schnittlinien II-II, IIIA-IIIA und IIIB-IIIB der Fig. 1.

Das Crashmanagementsystem 10 umfasst wenigstens zwei Decklagen 22v, 22h aus einem ersten endlosfaserverstärkten Kunststoffmaterial. Dabei kann die Decklage 22v als vordere Decklage bezeichnet werden, und die Decklage 22h kann als hintere Decklage bezeichnet werden, insbesondere bezogen auf eine montierte Stellung im Frontbereich eines Kraftfahrzeugs.

Zwischen den beiden Decklagen 22h, 22v ist ein Kernelement 24 aus einem zweiten Kunststoffmaterial angeordnet, wobei das Kernelement 24 und die Decklagen 22h, 22v stoffschlüssig miteinander verbunden sind. Das Kernelement 24 kann auch als Zwischenlage bezeichnet werden.

Die bereits unter Bezugnahme auf die Fig. 1 erwähnten, mehreren Rippenabschnitte 18 sind ebenfalls aus dem zweiten Kunststoffmaterial hergestellt. Ferner sind die Rippenabschnitte 18 auf einer der Decklagen, hier beispielhaft der vorderen Decklage 22v, angeordnet und mit dieser stoffschlüssig verbunden.

Die Rippenabschnitte 18 und das Kernelement 24 sind bei einem solchen Crashmanagementsystem 10 bzw. einem solchen Stoßfängerelement 12 mittels Spritzgießen oder Fließpressen einstückig miteinander verbunden.

Aus den Schnittdarstellungen der Fig. 2 und 3 ist ersichtlich, dass das Kernelement 24 mit den zwei Randabschnitten 20o, 20u einstückig verbunden ist. Dabei erstrecken sich die Randabschnitte 20o, 20u oben bzw. unten entlang von Rändern 26 der beiden Decklagen 22v, 22h.

Die Randabschnitte 20o, 20u weisen jeweils ausgehend von dem Kernelement 24 einen gekrümmten Übergangsabschnitt 28o, 28u und einen zum Kernelement 24 im Wesentlichen orthogonal ausgerichteten Verbindungabschnitt 30o, 30u auf.

Wie aus der Zusammenschau der Fig. 1 bis 3 ersichtlich, sind zwischen den beiden Randabschnitten 26o, 26u die mehreren Rippenabschnitte 18 ausgebildet. Insbesondere sind die Rippenabschnitte 18 einstückig mit den Randabschnitten 20o, 20u ausgebildet. Die beiden Randabschnitte 20o, 20u sind also im Wesentlichen parallel zueinander angeordnet. Die Rippenabschnitte 18 sind geneigt zu den Randabschnitten 20o, 20u ausgerichtet. Insbesondere sind die Rippenabschnitte 18 gekreuzt zueinander angeordnet, derart dass durch die Rippenabschnitte 18 oder/und die Randabschnitte 20o, 20u Hohlräume 34 umgeben werden, die einseitig durch eine der Decklagen 22v begrenzt sind.

Die oben beschriebenen Decklagen 22h, 22v, das Kernelement 24 und die Rippenabschnitte 18 bilden das sich im Wesentlichen in Fahrzeugbreitenrichtung Y erstreckende Stoßfängerelement 12 in Sandwichbauweise.

Das aus der Fig. 1 ersichtliche Crashboxelement 14 kann aus einem dritten Kunststoffmaterial hergestellt sein. Insbesondere kann das Crashboxelement 14 als Spritzgussteil ausgeführt sein. Ferner ist das Crashboxelement 14 mit dem Stoßfängerelement 12, insbesondere der Decklage 22h verbunden. Dabei können das Crashboxelement 14 und das Stoßfängerelement 12 miteinander verschraubt oder/und verklebt bzw. (kunststoff-)verschweißt sein.

Es wird darauf hingewiesen, dass in den Fig. 1 bis 3 durch gestrichelte Doppelpfeile die jeweilige Neigung von Rippenelementen 18 illustriert ist, so dass die Neigung nicht nur in der Fig. 1 erkennbar ist, sondern auch in den ebenen Schnittdarstellungen der Fig. 2 und 3 erkennbar ist.

Als erstes Kunststoffmaterial für die beiden Decklagen 22h, 22v kommt beispielsweise endlosfaserverstärktes Polypropylen (PP) zum Einsatz. Als zweites Kunststoffmaterial für das Kernelement 24, die Randabschnitte 20o, 20u und die Rippenabschnitte 18 kommen beispielsweise Polypropylen oder Polyamide zum Einsatz. Als drittes Kunststoffmaterial für das Crashboxelement 14 kann beispielsweise Polypropylen oder Polyamide verwendet werden. Das zweite und dritte Kunststoffmaterial können identisch sein.

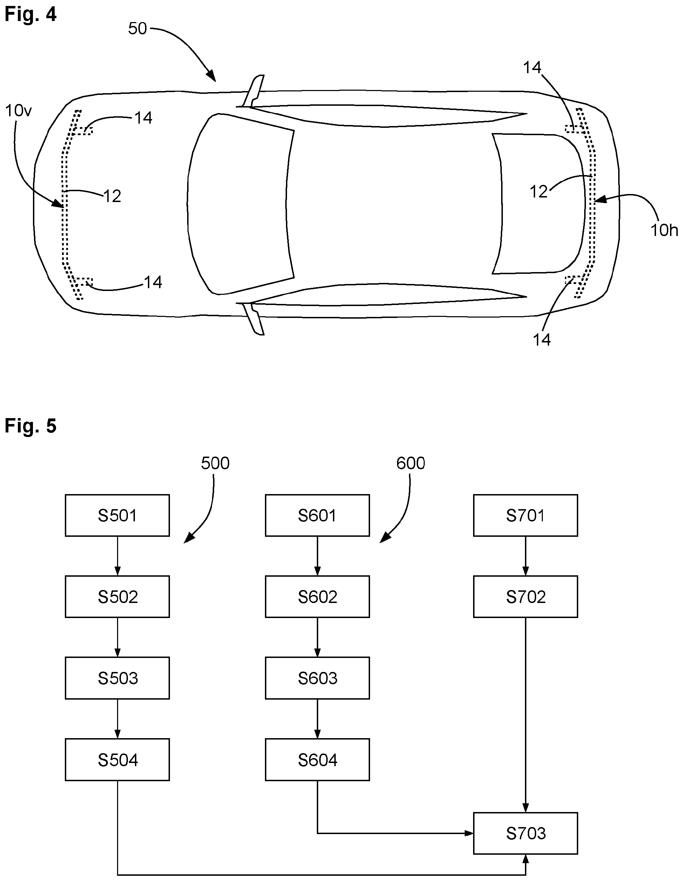

Fig. 4 zeigt in einer vereinfachten und schematische Draufsicht ein Kraftfahrzeug 50. Gestrichelt sind in dem Fahrzeug 50 ein vordere Crashmanagementsystem 10v und ein hintere Crashmanagementsystem 10h angedeutet. Wobei jedes Crashmanagementsystem 10v, 10h den die oben unter Bezugnahme auf die Fig. 1 bis 3 beschriebene Struktur aufweisen kann. Aus der Fig. 4 sind insbesondere auch die jeweiligen Crashboxelemente 14 und Stoßfängerelement 12 ersichtlich.

Fig. 5 zeigt vereinfacht ein Ablaufdiagramm für alternative Verfahren 500, 600 zu Herstellung eines oben beschriebenen Crashmanagementsystems 10.

Das Verfahren 500 basiert auf dem Fließpressen zur Herstellung des Crashmanagementsystems 10. Gemäß einem ersten Schritt S501 erfolgt ein Bereitstellen einer ersten vorgewärmten Decklage, beispielsweise der Decklage 22h, aus einem ersten endlosfaserverstärkten Kunststoffmaterial in einem Presswerkzeug. In Schritt S502 erfolgt ein Bereitstellen einer Fließpressmasse aus einem zweiten Kunststoffmaterial auf der ersten Decklage, etwa der Decklage 22h. Gemäß einem Schritt S503 erfolgt ein Bereitstellen einer zweiten vorgewärmten Decklage, etwa der Decklage 22v, aus dem ersten Kunststoffmaterial auf der Fließpressmasse. Schließlich erfolgt gemäß Schritt S504 ein Pressen der beiden Decklagen 22h, 22v und der Fließpressmasse, derart dass zwischen den Decklagen 22h, 22v das Kernelement 24 ausgeformt wird und auf einer der Decklagen 22v Rippenabschnitte 18 ausgebildet werden, so dass ein Stoßfängerelement 12 in Sandwichbauweise erzeugt wird.

Das Verfahren 600 basiert auf dem Spritzgießen zur Herstellung des Crashmanagementsystems 10. Gemäß einem Schritt S601 erfolgt ein Bereitstellen einer ersten und einer zweiten vorgewärmten Decklage 22h, 22v aus einem ersten endlosfaserverstärkten Kunststoffmaterial in einem Spritzgusswerkzeug. Gemäß Schritt S602 erfolgt ein Schließen des Spritzgusswerkzeugs. Schritt S603 illustriert das Einspritzen einer Spritzgussmasse aus einem zweiten Kunststoffmaterial, derart dass zwischen den Decklagen 22h, 22v ein Kernelement 24 aus der Spritzgussmasse ausgeformt wird und auf einer der Decklagen 22v Rippenabschnitte 18 aus der Spritzgussmasse ausgebildet werden, so dass ein Stoßfängerelement 12 in Sandwichbauweise erzeugt wird.

Bei dem Verfahren 600 kann gemäß einem optionalen Schritt S604 nach dem Einspritzen der Spritzgussmasse ein Expansionshub des Spritzgusswerkzeugs durchgeführt werden, wobei Werkzeughälften des Spritzgusswerkzeug wenige Millimeter voneinander wegbewegt werden, derart dass zumindest eine Expansion des Kernelements 24 ermöglicht wird.

Parallel zu den beiden Verfahren 500 bzw. 600 kann in einem Spritzgusswerkzeug wenigstens ein Crashboxelement 14 hergestellt werden (S701). Gemäß Schritt S702 wird so hergestellte Crashboxelement 14 bereitgestellt. Gemäß Schritt S703 erfolgt ein Verbinden von wenigstens einem Crashboxelement 14 mit dem betreffenden Stoßfängerelement 12, das durch das Verfahren 500 oder 600 hergestellt worden ist.

## Patentansprüche

1. Crashmanagementsystem (10) für ein Kraftfahrzeug (50) mit wenigstens zwei Decklagen (22h, 22v) aus einem ersten endlosfaserverstärkten Kunststoffmaterial;
einem zwischen den beiden Decklagen (22h, 22v) angeordneten Kernelement (24) aus einem zweiten Kunststoffmaterial, wobei das Kernelement (24) und die Decklagen (22h, 22v) stoffschlüssig miteinander verbunden sind;
**gekennzeichnet durch**
mehrere Rippenabschnitte (18) aus dem zweiten Kunststoffmaterial, die auf einer der Decklagen (22v) angeordnet und mit dieser stoffschlüssig verbunden sind;
wobei die Rippenabschnitte (18) und das Kernelement (24) mittels Spritzgießen oder Fließpressen einstückig miteinander verbunden sind.

2. Crashmanagementsystem (10) nach Anspruch 1, wobei das Kernelement (24) mit wenigstens einem Randabschnitt (20o, 20u) einstückig verbunden ist, der sich entlang von Rändern (26) der beiden Decklagen (22h, 22v) erstreckt.

3. Crashmanagementsystem (10) nach Anspruch 2, wobei der Randabschnitt (20o, 20u) ausgehend von dem Kernelement (24) einen gekrümmten Übergangsabschnitt (28o, 28u) und einen zum Kernelement (24) im Wesentlichen orthogonal ausgerichteten Verbindungabschnitt (30o, 30u) aufweist.

4. Crashmanagementsystem (10) nach Anspruch 3, wobei das Kernelement (24) zwei Randabschnitte (20o, 20u) aufweist, zwischen denen die Rippenabschnitte (18) angeordnet sind.

5. Crashmanagementsystem (10) nach Anspruch 4, wobei die beiden Randabschnitte (20o, 20u) im Wesentlichen parallel zueinander angeordnet sind und die Rippenabschnitte (18) geneigt zu den Randabschnitten (20o, 20u) ausgerichtet sind.

6. Crashmanagementsystem (10) nach einem der vorhergehenden Ansprüche, wobei die Decklagen (22h, 22v), das Kernelement (24) und die Rippenabschnitte (18) ein sich im Wesentlichen in Fahrzeugbreitenrichtung (Y) erstreckendes Stoßfängerelement (12) in Sandwichbauweise bilden.

7. Crashmanagementsystem (10) nach einem der vorhergehenden Ansprüche, wobei es wenigstens zwei Crashboxelemente (14) aus einem dritten Kunststoffmaterial aufweist, die dazu eingerichtet sind, eine Verbindung zwischen dem Crashmanagementsystem (10) und einer Fahrzeugkarosserie (16), insbesondere Längsträgern oder/und Querträgern, herzustellen.

8. Crashmanagementsystem (10) nach Anspruch 6 und 7, wobei die Crashboxelemente (14) mit dem Stoßfängerelement (12) verbunden sind, insbesondere verschraubt oder verschweißt oder verklebt sind.

9. Crashmanagementsystem (10) nach Anspruch 7 oder 8, wobei die Crashboxelemente (14) als Spritzgussteil ausgeführt sind.

10. Verfahren (500) zur Herstellung eines Crashmanagementsystems (10) gemäß einem der vorhergehenden Ansprüche, umfassend die Schritte:
Bereitstellen (S501) in einem Presswerkzeug einer ersten vorgewärmten Decklage (22h) aus einem ersten endlosfaserverstärkten Kunststoffmaterial;
Bereitstellen (S502) einer Fließpressmasse aus einem zweiten Kunststoffmaterial auf der ersten Decklage (22h);
Bereitstellen (S503) einer zweiten vorgewärmten Decklage (22v) aus dem ersten Kunststoffmaterial auf der Fließpressmasse;
Pressen (S504) der beiden Decklagen (22h, 22v) und der Fließpressmasse, derart dass zwischen den Decklagen (22h, 22v) ein Kernelement (24) ausgeformt wird und auf einer der Decklagen (22v) Rippenabschnitte (18) ausgebildet werden, so dass ein Stoßfängerelement (12) in Sandwichbauweise erzeugt wird.

11. Verfahren (600) zur Herstellung eines Crashmanagementsystems (10) gemäß einem der Ansprüche 1 bis 9, umfassend die Schritten:
Bereitstellen (S601) in einem Spritzgusswerkzeug einer ersten und einer zweiten vorgewärmten Decklage (22h, 22v) aus einem ersten endlosfaserverstärkten Kunststoffmaterial;
Schließen (S602) des Spritzgusswerkzeugs;
Einspritzen (S603) einer Spritzgussmasse aus einem zweiten Kunststoffmaterial, derart dass zwischen den Decklagen (22h, 22v) ein Kernelement (24) aus der Spritzgussmasse ausgeformt wird und auf einer der Decklagen (22v) Rippenabschnitte (18) aus der Spritzgussmasse ausgebildet werden, so dass ein Stoßfängerelement (12) in Sandwichbauweise erzeugt wird.

12. Verfahren (600) nach Anspruch 11, wobei nach dem Einspritzen der Spritzgussmasse ein Expansionshub des Spritzgusswerkzeugs durchgeführt wird (S604), wobei Werkzeughälften des Spritzgusswerkzeug wenige Millimeter voneinander wegbewegt werden, derart dass zumindest eine Expansion des Kernelements (24) ermöglicht wird.

13. Verfahren (500; 600) nach einem der Ansprüche 10 bis 12, ferner umfassend die Schritte:
Herstellen (S701) von wenigstens einem Crashboxelement (14) in einem Spritzgusswerkzeug;
Bereitstellen (S702) von dem Crashboxelement (14);
Verbinden (S703) von wenigstens einem Crashboxelement (14) mit dem Stoßfängerelement (12).

14. Kraftfahrzeug (50) mit wenigstens einem Crashmanagementsystem (10) gemäß einem der Ansprüche 1 bis 9, wobei das Crashmanagementsystem (10) mit einer Karosserie, insbesondere Längsträgern oder/und Querträgern, des Kraftfahrzeugs (50) verbunden ist.

## Claims

1. Crash management system (10) for a motor vehicle (50) with at least two outer layers (22h, 22v) made of a first endless-fiber-reinforced plastic material,
a core element (24) made of a second plastic material arranged between the two outer layers (22h, 22v), wherein the core element (24) and the outer layers (22h, 22v) are materially bonded to one another,
**characterized by**
multiple rib sections (18) made of the second plastic material, which are arranged on one of the outer layers (22v) and are materially bonded thereto,
wherein the rib sections (18) and the core element (24) are joined together in one piece by means of injection molding or extrusion.

2. Crash management system (10) according to claim 1, wherein the core element (24) is joined in one piece to at least one edge section (20o, 20u), which extends along edges (26) of the two outer layers (22h, 22v).

3. Crash management system (10) according to claim 2, wherein, starting from the core element (24), the edge section (20o, 20u) has a curved transition section (28o, 28u) and a connecting section (30o, 30u) oriented substantially orthogonally to the core element (24).

4. Crash management system (10) according to claim 3, wherein the core element (24) has two edge sections (20o, 20u), between which the rib sections (18) are arranged.

5. Crash management system (10) according to claim 4, wherein the two edge sections (20o, 20u) are arranged substantially parallel to one another and the rib sections (18) are oriented inclined toward the edge sections (20o, 20u).

6. Crash management system (10) according to any one of the preceding claims, wherein the outer layers (22h, 22v), the core element (24) and the rib sections (18) form a bumper element (12) extending substantially in the vehicle width direction (Y) in a sandwich construction.

7. Crash management system (10) according to any one of the preceding claims, wherein it has at least two crash box elements (14) made of a third plastic material, which are configured to create a connection between the crash management system (10) and a vehicle body (16), in particular longitudinal members and/or cross members.

8. Crash management system (10) according to claim 6 and 7, wherein the crash box elements (14) are connected to the bumper element (12), in particular screwed or welded or adhesively bonded.

9. Crash management system (10) according to claim 7 or 8, wherein the crash box elements (14) are designed as an injection molded part.

10. Method (500) for producing a crash management system (10) according to any one of the preceding claims, comprising the steps of: Providing (S501) a first preheated outer layer (22h) made of a first endless-fiber-reinforced plastic material in a press tool,
Providing (S502) an extruded compound made of a second plastic material on the first cover layer (22h),
Providing (S503) a second preheated cover layer (22v) made of the first plastic material on the extruded compound,
Pressing (S504) the two outer layers (22h, 22v) and the extruded compound, such that a core element (24) is shaped between the outer layers (22h, 22v) and rib sections (18) are formed on one of the outer layers (22v), such that a bumper element (12) is produced in a sandwich construction.

11. Method (600) for producing a crash management system (10) according to any one of claims 1 to 9, comprising the steps of:
Providing (S601) a first and a second preheated outer layer (22h, 22v) made of a first endless-fiber-reinforced plastic material in an injection molding tool,
Closing (S602) the injection molding tool,
Injecting (S603) an injection molding compound made of a second plastic material, such that a core element (24) is shaped from the injection molding compound between the outer layers (22h, 22v) and rib sections (18) are formed from the injection molding compound on one of the outer layers (22v), such that a bumper element (12) is produced in a sandwich construction.

12. Method (600) according to claim 11, wherein, following injection of the injection molding compound, an expansion stroke of the injection molding tool is performed (S604), wherein tool halves of the injection molding tool are moved a few millimeters away from one another, such that at least one expansion of the core element (24) is facilitated.

13. Method (500; 600) according to any one of claims 10 to 12, further comprising the steps of:
Producing (S701) at least one crash box element (14) in an injection molding tool,
Providing (S702) the crash box element (14),
Connecting (S703) at least one crash box element (14) to the bumper element (12).

14. Motor vehicle (50) with at least one crash management system (10) according to any one of claims 1 to 9, wherein the crash management system (10) is connected to a body, in particular longitudinal members and/or cross members, of the motor vehicle (50).

## Revendications

1. Système de gestion de collision (10) pour un véhicule à moteur (50) avec au moins deux couches superficielles (22h, 22v) constitué d'un premier matériau plastique renforcé de fibres continues ;
un élément central (24) disposé entre les deux couches superficielles (22h, 22v) et constitué d'un deuxième matériau plastique, dans lequel l'élément central (24) et les couches superficielles (22h, 22v) sont reliés entre eux par accouplement de matière ;
**caractérisé par**
plusieurs sections de nervures (18) constituées du deuxième matériau plastique qui sont disposées sur l'une des couches superficielles (22v) et reliées à celle-ci par accouplement de matière ;
dans lequel les sections de nervures (18) et l'élément central (24) sont reliés entre eux d'un seul tenant par moulage par injection ou extrusion.

2. Système de gestion de collision (10) selon la revendication 1, dans lequel l'élément central (24) est relié d'un seul tenant à au moins une section de bord (20o, 20u) qui s'étend le long de bords (26) des deux couches superficielles (22h, 22v).

3. Système de gestion de collision (10) selon la revendication 2, dans lequel la section de bord (20o, 20u) présente, en partant de l'élément central (24), une section de transition courbée (28o, 28u) et une section de liaison (30o, 30u) orientée de manière sensiblement orthogonale par rapport à l'élément central (24).

4. Système de gestion de collision (10) selon la revendication 3, dans lequel l'élément central (24) présente deux sections de bord (20o, 20u) entre lesquelles les sections de nervures (18) sont disposées.

5. Système de gestion de collision (10) selon la revendication 4, dans lequel les deux sections de bord (20o, 20u) sont disposées de manière sensiblement parallèle l'une à l'autre, et les sections de nervure (18) sont orientées de manière inclinée par rapport aux sections de bord (20o, 20u).

6. Système de gestion de collision (10) selon l'une quelconque des revendications précédentes, dans lequel les couches superficielles (22h, 22v), l'élément central (24) et les sections de nervures (18) forment un élément de pare-chocs (12) s'étendant sensiblement en direction de la largeur du véhicule (Y) dans une structure en sandwich.

7. Système de gestion de collision (10) selon l'une quelconque des revendications précédentes, dans lequel il présente au moins deux éléments de boîte-tampon (14) constitué d'un troisième matériau plastique, éléments qui sont configurés pour établir une liaison entre le système de gestion de collision (10) et une carrosserie de véhicule (16), en particulier des longerons et/ou traverses.

8. Système de gestion de collision (10) selon les revendications 6 et 7, dans lequel les éléments de boîte-tampon (14) sont reliés à l'élément de pare-chocs (12), en particulier vissés, soudés ou collés.

9. Système de gestion de collision (10) selon les revendications 7 ou 8, dans lequel les éléments de boîte-tampon (14) sont réalisés en tant que pièce moulée par injection.

10. Procédé (500) de fabrication d'un système de gestion de collision (10) selon l'une quelconque des revendications précédentes, comprenant les étapes consistant à : fournir (S501) dans un outil de presse une première couche superficielle préchauffée (22h) constituée d'un premier matériau plastique renforcé de fibres continues ;
fournir (S502) une masse extrudée constituée d'un deuxième matériau plastique sur la première couche superficielle (22h) ;
fournir (S503) une deuxième couche superficielle préchauffée (22v) constituée du premier matériau plastique sur la masse extrudée ;
presser (S504) les deux couches superficielles (22h, 22v) et la masse extrudée de telle manière qu'un élément central (24) soit formé entre les couches superficielles (22h, 22v) et que des sections de nervures (18) soient formées sur l'une des couches superficielles (22v), de sorte qu'un élément de pare-chocs (12) soit produit dans une structure en sandwich.

11. Procédé (600) de fabrication d'un système de gestion de collision (10) selon l'une quelconque des revendications 1 à 9, comprenant les étapes consistant à :
fournir (S601) dans un outil de moulage par injection une première et une deuxième couche superficielle préchauffée (22h, 22v) constituée d'un premier matériau plastique renforcé de fibres continues ;
fermer (S602) l'outil de moulage par injection ;
injecter (S603) une masse de moulage par injection constituée d'un deuxième matériau plastique de telle manière qu'un élément central (24) soit formé à partir de la masse de moulage par injection entre les couches superficielles (22h, 22v) et que des sections de nervures (18) soient formées à partir de la masse moulée par injection sur l'une des couches superficielles (22v), de sorte qu'un élément de pare-chocs (12) soit produit dans une structure en sandwich.

12. Procédé (600) selon la revendication 11, dans lequel, après l'injection de la masse moulée par injection, une course d'expansion de l'outil de moulage par injection est effectuée (S604), dans lequel des moitiés d'outil de l'outil de moulage par injection sont écartées de quelques millimètres l'une de l'autre de telle manière qu'au moins une expansion de l'élément central (24) soit facilitée.

13. Procédé (500 ; 600) selon l'une quelconque des revendications 10 à 12, comprenant en outre les étapes consistant à :
fabriquer (S701) au moins un élément de boîte-tampon (14) dans un outil de moulage par injection ;
fournir (S702) l'élément de boîte-tampon (14) ;
relier (S703) au moins un élément de boîte-tampon (14) à l'élément de pare-chocs (12).

14. Véhicule à moteur (50) avec au moins un système de gestion de collision (10) selon l'une quelconque des revendications 1 à 9, dans lequel le système de gestion de collision (10) est relié à une carrosserie, en particulier des longerons et/ou traverses, du véhicule à moteur (50).
